Europäisches Patentamt

European Patent Office

Office européen des brevets

(19)

(11) Veröffentlichungsnummer: **0.011 158 B1**

(12) **EUROPÄISCHE PATENTSCHRIFT**

(45) Veröffentlichungstag der Patentschrift: 06.10.82

(51) Int. Cl.³: **C 08 L 25/12, C 08 L 55/02**

(21) Anmeldenummer: **79104092.6**

(22) Anmeldetag: **22.10.79**

(54) **Schlagzähe thermoplastische Kunststoffmassen, ihre Verwendung zur Herstellung von Formkörpern und aus diesen Massen hergestellte Formkörper.**

(30) Priorität: **27.10.78 DE 2846754**

(43) Veröffentlichungstag der Anmeldung: **28.05.80 Patentblatt 80/11**

(45) Bekanntmachung des Hinweises auf die Patenterteilung: **06.10.82 Patentblatt 82/40**

(84) Benannte Vertragsstaaten: **AT BE CH DE FR IT NL SE**

(56) Entgegenhaltungen:
**AT-B-335 174
AT-B-335 175
DE-C-1 238 207
GB-A-1 477 431
GB-A-1 526 484**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen (DE)**

(72) Erfinder: **Priebe, Edmund, Dr., Dipl.-Chem., Bensheimer Ring 7A, D-6710 Frankenthal (DE)**
Erfinder: **Swoboda, Johann, Dr., Sternstrasse 122, D-6700 Ludwigshafen (DE)**
Erfinder: **Brandstetter, Franz, Dr., Dipl.-Chem., Ritterbuechel 45, D-6730 Neustadt 18 (DE)**
Erfinder: **Scharf, Bernhard, Dr., Dipl.-Chem., Branlchstrasse 3, D-6905 Schriesheim (DE)**

Schlagzähe thermoplastische Kunststoffmassen, ihre Verwendung zur Herstellung von
Formkörpern und aus diesen Massen hergestellte Formkörper

Die Erfindung betrifft Mischungen aus mit kautschukartigen Polymerisaten schlagzäh modifizierten Styrol-Acrylnitril-Copolymerisaten, die thermoplastische Formmassen mit hoher Schlagzähigkeit, hohem Oberflächenglanz und guten Verarbeitungseigenschaften liefern.

Es ist bekannt, thermoplastisch verarbeitbare schlagzähe Formmassen herzustellen, indem man Styrol/Acrylnitril-Copolymerisate durch Einarbeiten von Kautschuken modifiziert. Dies geschieht im allgemeinen durch Pfropfmischpolymerisation von Styrol und Acrylnitril in Gegenwart des Kautschuks sowie gegebenenfalls nachträglich Abmischen dieses Pfropfproduktes mit einer separat hergestellten Hartkomponente, die im allgemeinen aus einem Styrol-Acrylnitril-Copolymerisat besteht. Je nach Art des bei der Herstellung eingesetzten Kautschuks werden Formmassen mit unterschiedlichem Eigenschaftsbild erhalten.

Bei den sogenannten ABS-Polymerisaten werden als Kautschuk zur Schlagfestmodifizierung Polybutadien verwendet. Die so erhaltenen Produkte besitzen eine gute Schlagzähigkeit, insbesondere auch bei sehr niedrigen Temperaturen. Derartige schlagzähe Massen können sich durch optimale Kombination von Eigenschaften, die Zähigkeit, Fließfähigkeit und Oberflächenglanz auszeichnen. Ein Verfahren was in technisch einfacher und wirtschaftlichen großtechnischem Maßstab durchführbare Weise ermöglicht, ist beispielsweise Gegenstand der DE-AS 2 427 960.

Es zeigte sich doch, daß derartige Massen zwar einen guten Oberflächenglanz, hervorragende verarbeitungstechnische Eigenschaften haben, jedoch aufgrund der Eigenschaften des gebrauchten Kautschuks empfindlich gegen Temperaturbelastungen sind. Auch können die Materialeigenschaften von Werkstücken aus derartigen Formmassen bei längerer Einwirkung von Licht ungünstig beeinflußt werden.

Es sind außerdem sogenannte ABS-Polymerisate bekannt, bei denen als Kautschuk zur Schlagfestmodifizierung Copolymerisate aus Butadien mit Acrylestern sowie Vinyläthern verwendet werden. Formkörper aus derartigen Formmassen zeichnen sich insbesondere durch gute Alterungsbeständigkeit und eine geringere Empfindlichkeit gegenüber der Einwirkung von Licht aus.

Es zeigt sich jedoch, daß solche Formmassen beim Extrudieren oder Pressen Formteile ergeben, deren Farbton meist schon nach einer Lagerung von wenigen Tagen bei Zutritt von Frischluft merklich aufhellt, wodurch sie ein weißliches, schimmelartiges Aussehen annehmen. Diese Erscheinung wirkt besonders bei dunkleren Einfärbungen störend.

Bei diesem Effekt handelt es sich nicht um eine übliche Alterungserscheinung bei Kunststoffen. Es kann vielmehr angenommen werden, daß Kautschukpartikel, die direkt an der Oberfläche des Formteils sitzen, vermutlich durch in der Luft enthaltenes Ozon angegriffen werden und unter der Wirkung von thermischen Schrumpfspannungen aufreißen. Besonders bei starker Agglomeration der Kautschukteilchen bilden sich so weit verzweigte Kavernen in der Oberflächenschicht. Diese Materialschädigung macht sich makroskopisch durch vermehrte Lichtstreuung bemerkbar, da für die Remission des Lichtes jetzt nicht nur der Brechzahlunterschied zwischen Kautschuk- und Hartkomponente, sondern die beträchtlich größere Differenz gegenüber der Luft in den Hohlräumen maßgebend ist.

Problematisch ist außerdem, daß die Eigenschaften von Formteilen, die aus derartigen Formmassen hergestellt worden sind, mitunter stark von den Verarbeitungsbedingungen abhängen. Formmassen auf der Grundlage derartiger Polymerisate, die eine optimale Eigenschaftskombination aufweisen, jedoch noch nicht in allen Eigenschaften befriedigen, sind Gegenstand der DE-PS 1 238 207.

Stand der Technik sind auch die aus den AT-PS 335 174 und 335 175 bekannten thermoplastischen Mischungen aus einem Styrol-Acrylnitril Copolymerisat und zwei mit Styrol und Acrylnitril bepfropften Butadienpolymerisaten mit unterschiedlicher Teilchengröße. So können z. B. die Mischungen gepfropftes Polybutadien der Teilchengröße 0,25 μm und ein gepfropftes Acrylester-Butadien-Copolymerisat der Teilchengröße 0,08 μm enthalten (Beispiel 8 der AT-PS 335 174). Solche thermoplastischen Massen zeichnen sich durch gute Zähigkeit und Fließfähigkeit sowie durch einen guten Oberflächenglanz aus. Es hat sich jedoch gezeigt, daß das Vergilbungsverhalten noch nicht voll befriedigt.

Es bestand die Aufgabe, solche Produkte zu schaffen, die eine gute Schlagzähigkeit, insbesondere auch bei niederen Temperaturen besitzen, aus denen Formkörper mit hohem Oberflächenglanz hergestellt werden können, die eine geringe thermische Empfindlichkeit und geringe Lichtempfindlichkeit haben. Außerdem sollte der Oberflächenglanz von den Verarbeitungsbedingungen weitgehend unabhängig sein und die Farbkonstanz dunkler Farbtöne gewährleistet werden (d. h. kein Schimmeleffekt).

Diese Aufgabe wird durch die erfindungsgemäßen Massen aus einer Mischung auf Basis von 2 verschiedenen Pfropfmischpolymerisaten des Styrols und Acrylnitrils gelöst.

Gegenstand der Erfindung sind somit schlagzähe thermoplastische Massen, bestehend im wesentlichen aus

(A) einer Hartkomponente aus einem oder mehreren Copolymerisaten von Styrol und/oder α-Methylstyrol mit Acrylnitril, wobei diese Copolymerisate 20 bis 40 Gew.-% Acrylnitril einpolymerisiert enthalten,

(B) einem ersten Pfropfmischpolymerisat, das gebildet worden ist aus

(B$_1$) 40 bis 80 Gew.-%, bezogen auf (B), eines Butadienpolymerisates aus teilweise agglomerierten Teilchen, wobei mehr als 50% der Teilchen (Zahlen-Verteilung) im nicht agglomerierten Zustand vorliegen, mit einer mittleren Teilchengröße von 0,20 bis 0,45 μm (d$_{50}$-Wert der integralen Massenverteilung), worauf

(B$_2$) 20 bis 60 Gew.-%, bezogen auf (B), einer Mischung von Styrol und Acrylnitril im Gewichtsverhältnis 75 : 25 bis 65 : 35 aufgepfropft worden ist,

(C) einem zweiten, getrennt hergestellten Pfropfmischpolymerisat das gebildet worden ist aus

(C$_1$) 50 bis 85 Gew.-%, bezogen auf (C), eines Copolymerisates aus 30 bis 77 Gew.-% Acrylsäurebutylester und/oder Acrylsäureäthylhexylester, 20 bis 40 Gew.-% Butadien und 3 bis 30 Gew.-% Vinylalkyläther mit 1 bis 8 Kohlenstoffatomen im Alkylrest, wobei sich die Prozente zu 100 addieren, mit einer mittleren Teilchengröße unter 0,15 μm (d$_{50}$-Wert der integralen Massenverteilung) worauf

(C$_2$) 15 bis 50 Gew.-%, bezogen auf (C), einer Mischung von Styrol und Acrylnitril im Gewichtsverhältnis 75 : 25 bis 65 : 35 aufgepfropft worden ist;

wobei in der Mischung [(A)+(B)+(C)] das Gewichtsverhältnis der Pfropfgrundlagen (B$_1$) und (C$_1$) im Bereich 70 : 30 bis 30 : 70 liegt und der Anteil der Summe der beiden Pfrop' rundlagen (B$_1$ und C$_1$) 10 bis 35 Gew.-%, bezogen auf die Gesamtmischung [(A)+(B)+(C)], beträgt.

Die erfindungsgemäßen Mischungen können als weitere Komponente (D) gegebenenfalls übliche Zusatz- und/oder Hilfsstoffe in gebräuchlichen und wirksamen Mengen enthalten.

Die in den erfindungsgemäßen Mischungen enthaltene Komponente (A) ist eine Hartkomponente aus einem oder mehreren Copolymerisaten von Styrol und/oder α-Methylstyrol mit Acrylnitril. Der Acrylnitril-Gehalt in diesen Copolymerisaten der Hartkomponente (A) soll 20 bis 40 Gew.-%, bezogen auf das jeweilige Copolymerisat der Hartkomponente, betragen. Zu dieser Hartkomponente (A) zählen auch wie weiter unten erläutert, die bei der Pfropfmischpolymerisation zur Herstellung der Komponenten (B) und (C) entstehenden freien, nicht gepfropften Styrol/Acrylnitril-Copolymerisate. Je nach den bei der Pfropfmischpolymerisation für die Herstellung der Pfropfmischpolymerisate (B) und (C) gewählten Bedingungen kann es möglich sein, daß bei der Pfropfmischpolymerisation schon ein hinreichender Anteil an Hartkomponente (A) gebildet worden ist. Im allgemeinen wird es jedoch nötig sein, die bei der Pfropfmischpolymerisation erhaltenen Produkte mit zusätzlicher, separat hergestellter Hartkomponente (A) zu mischen.

Bei der separat hergestellten Hartkomponente (A) kann es sich um ein Styrol/Acrylnitril-Copolymerisat, ein α-Methylstyrol/Acrylnitril-Copolymerisat oder ein α-Methylstyrol/Styrol/Acrylnitril-Terpolymerisat handeln. Diese Copolymerisate können einzeln oder auch in Mischung miteinander für die Hartkomponente eingesetzt werden, so daß es sich bei der Hartkomponente (A) der erfindungsgemäßen Mischungen beispielsweise um eine Mischung aus einem Styrol/Acrylnitril-Copolymerisat und einem α-Methylstyrol/Acrylnitril-Copolymerisat handeln kann. In dem Fall, in dem die Hartkomponente (A) der erfindungsgemäßen Massen aus einer Mischung von einem Styrol/Acrylnitril-Copolymerisat und einem α-Methylstyrol/Acrylnitril-Copolymerisat besteht, soll der Acrylnitril-Gehalt der beiden Copolymerisate tunlichst nicht mehr als 10 Gew.-%, vorzugsweise nicht mehr als 5 Gew.-%, bezogen auf das Copolymerisat, voneinander abweichen. Die Hartkomponente (A) der erfindungsgemäßen Massen kann jedoch auch nur aus einem einzigen Styrol/Acrylnitril-Copolymerisat bestehen, nämlich dann, wenn bei den Pfropfmischpolymerisationen zur Herstellung der Komponenten (B) und (C) als auch bei der Herstellung der zusätzlichen, separat hergestellten Hartkomponenten von dem gleichen Monomer-Gemisch aus Styrol und Acrylnitril ausgegangen wird.

Die Hartkomponente (A) kann nach den herkömmlichen Methoden erhalten werden. So kann die Copolymerisation des Styrols und/oder α-Methylstyrols mit dem Acrylnitril in Masse, Lösung, Suspension oder wäßriger Emulsion durchgeführt werden. Die Hartkomponente (A) hat vorzugsweise eine Viskositätszahl von 40 bis 100, insbesondere von 50 bis 85. Die Bestimmung der Viskositätszahl erfolgt analog DIN 53 726; dabei werden 0,5 g Material in 100 ml Dimethylformamid gelöst.

Die Herstellung des erfindungsgemäß einzusetzenden Pfropfmischpolymerisats (B) erfolgt in zwei Stufen. Hierzu wird zunächst die Pfropfgrundlage (B$_1$) hergestellt.

Zunächst wird in der ersten Stufe ein Kautschuklatex auf herkömmliche Weise hergestellt. Der Grundkautschuk ist durch seine Glastemperatur definiert, die unterhalb von −40°C, vorzugsweise unterhalb von −60°C liegen soll. Als Monomeres wird vorzugsweise Butadien allein verwendet. Da für manche Zwecke Butadien-Styrol bzw. Butadien-Acrylnitril-Kautschuke Vorteile zeigen, können auch Monomeren-Gemische aus Butadien und Styrol bzw. Acrylnitril eingesetzt werden, die vorzugsweise zwischen 99 und 90 Gew.-%, bezogen auf das Gemisch, Butadien enthalten.

Die Polymerisation wird wie üblich bei Temperaturen zwischen 30 und 90°C durchgeführt, in Gegenwart von Emulgatoren, wie z. B. Alkalisalzen von Alkyl- oder Alkylarylsulfonaten, Alkylsulfaten, Fettalkoholsulfonaten oder Fettsäuren mit 10 bis 30 Kohlenstoffatomen; vorzugsweise nimmt man

3

Natriumsalze von Alkylsulfonaten oder Fettsäuren mit 12 bis 18 Kohlenstoffatomen. Die Emulgatoren werden in Mengen von 0,3 bis 5, insbesondere von 1,0 bis 2,0 Gew.-%, bezogen auf die Monomeren, verwendet. Es werden die üblichen Puffersalze, wie Natriumbicarbonat und Natriumpyrophosphat, verwendet.

Ebenso werden die üblichen Initiatoren, wie Persulfate oder organische Peroxide mit Reduktionsmitteln verwendet, sowie gegebenenfalls Molekulargewichtsregler, wie Mercaptane, Terpinole oder dimeres $\alpha$-Methylstyrol, die am Anfang oder während der Polymerisation zugegeben werden. Das Gewichtsverhältnis Wasser zu Monomere liegt vorzugsweise zwischen 2 : 1 und 1 : 1. Die Polymerisation wird so lange fortgesetzt, bis mehr als 90%, vorzugsweise mehr als 96% der Monomeren polymerisiert sind. Dieser Umsatz ist im allgemeinen nach 4 bis 20 Stunden erreicht. Der dabei erhaltene Kautschuklatex hat eine Teilchengröße, die unterhalb von 0,20 µm, vorzugsweise unter 0,15 µm, liegt. Die Teilchengrößenverteilung solcher Kautschuklatizes ist verhältnismäßig eng, so daß man von einem nahezu monodispersen System sprechen kann.

In der zweiten Stufe wird nun der Kautschuklatex agglomeriert. Dies geschieht z. B. durch Zugabe einer Dispersion eines Acrylesterpolymerisates. Vorzugsweise werden Dispersionen von Copolymerisaten von Acrylestern von Alkoholen mit 1 bis 4 Kohlenstoffatomen, vorzugsweise von Äthylacrylat, mit 0,1 bis 10 Gew.-% wasserlösliche Polymerisate bildenden Monomeren, wie z. B. Acrylsäure, Methacrylsäure, Acrylamid oder Methacrylamid, N-Methylolmethacrylamid oder N-Vinylpyrrolidon, eingesetzt. Besonders bevorzugt ist ein Copolymerisat aus 96% Äthylacrylat und 4% Methacrylamid. Die Agglomerierdispersion kann gegebenenfalls auch mehrere der genannten Acrylesterpolymerisate enthalten.

Die Konzentration der Acrylesterpolymerisate in der Dispersion soll im allgemeinen zwischen 3 und 40 Gew.-% liegen. Bei der Agglomeration werden 0,2 bis 10, vorzugsweise 1 bis 5, Gewichtsteile der Agglomerierdispersion auf 100 Teile des Kautschuklatex, jeweils berechnet auf Feststoffe, eingesetzt. Die Agglomeration wird durch Zugabe der Agglomerierdispersion zum Kautschuk durchgeführt. Die Geschwindigkeit der Zugabe ist normalerweise nicht kritisch, im allgemeinen dauert sie etwa 1 bis 30 Minuten bei einer Temperatur zwischen 20 und 90° C, vorzugsweise zwischen 30 und 75° C.

Unter den genannten Bedingungen wird nur ein Teil der Kautschukteilchen agglomeriert, so daß eine bimodale oder breite Verteilung entsteht. Dabei liegen nach der Agglomeration im allgemeinen mehr als 50, vorzugsweise zwischen 75 und 95% der Teilchen (Zahlen-Verteilung) im nicht agglomerierten Zustand vor. Der mittlere Durchmesser der Kautschukteilchen liegt zwischen 0,20 und 0,45 µm, vorzugsweise zwischen 0,26 und 0,35 µm. Der erhaltene agglomerierte Kautschuklatex ist verhältnismäßig stabil, so daß er ohne weiteres gelagert und transportiert werden kann, ohne daß Koagulation eintritt.

Zur Herstellung des Pfropfmischpolymerisats (B) wird dann in Gegenwart des so erhaltenen Latex des Butadien-Polymerisats ein Monomeren-Gemisch aus Styrol und Acrylnitril polymerisiert, wobei das Gewichtsverhältnis von Styrol zu Acrylnitril in dem Monomeren-Gemisch im Bereich von 75 : 25 bis 65 : 35, vorzugsweise bei 70 : 30, liegen soll. Es ist vorteilhaft, diese Pfropfmischpolymerisation von Styrol und Acrylnitril auf das als Pfropfgrundlage dienende Butadien-Polymerisat wieder in wäßriger Emulsion unter den üblichen, oben aufgeführten Bedingungen durchzuführen. Die Pfropfmischpolymerisation kann zweckmäßig im gleichen System erfolgen wie die Emulsionspolymerisation zur Herstellung der Pfropfgrundlage (B₁), wobei, falls notwendig, weiterer Emulgator und Initiator zugegeben werden kann. Das aufzupfropfende Monomeren-Gemisch aus Styrol und Acrylnitril kann dem Reaktionsgemisch auf einmal, absatzweise in mehreren Stufen oder vorzugsweise kontinuierlich während der Polymerisation zugegeben werden. Die Pfropfmischpolymerisation des Gemisches von Styrol und Acrylnitril in Gegenwart des Butadien-Polymerisats wird so geführt, daß ein Pfropfgrad von 25 bis 45 Gew.-%, vorzugsweise von 30 bis 40 Gew.-%, im Pfropfmischpolymerisat (B) resultiert. Da die Pfropfausbeute bei der Pfropfmischpolymerisation nicht 100%ig ist, muß eine etwas größere Menge des Monomeren-Gemisches aus Styrol und Acrylnitril bei der Pfropfmischpolymerisation eingesetzt werden, als es dem gewünschten Pfropfgrad entspricht. Die Steuerung der Pfropfausbeute bei der Pfropfmischpolymerisation und somit des Pfropfgrades des fertigen Pfropfmischpolymerisats (B) ist jedem Fachmann geläufig und kann beispielsweise u. a. durch die Dosiergeschwindigkeit der Monomeren oder durch Reglerzugabe erfolgen (Chauvel, Daniel, ACS Polymer Preprints 15 [1974], Seite 329 ff.). Bei der Emulsions-Pfropfmischpolymerisation entstehen im allgemeinen etwa 5 bis 15 Gew.-%, bezogen auf das Pfropfmischpolymerisat, an freiem, ungepfropftem Styrol/Acrylnitril-Copolymerisat. Der Anteil des Pfropfmischpolymerisats (B) in dem bei der Pfropfmischpolymerisation erhaltenen Polymerisationsprodukt wird nach der weiter unten angegebenen Methode ermittelt.

Die Herstellung derartiger Polymerisate wird beispielsweise in der DE-As 2 427 960 beschrieben.

Die Herstellung der Komponente (C) erfolgt ebenfalls in zwei Stufen. Auch hier wird zunächst ein Copolymerisat (C₁) hergestellt, auf das dann in einem zweiten Schritt Styrol und Acrylnitril zur Herstellung des Polymerisates (C) aufgepfropft wird.

Das Mischpolymerisat (C₁) wird durch übliche Polymerisation in wäßriger Emulsion hergestellt. Die Comonomeren, die dieses Mischpolymerisat (C₁) bilden, sind Acrylsäurebutylester und/oder Acrylsäureäthylhexylester, die in Mengen von 30 bis 77 Gew.-% eingesetzt werden, Butadien, das 20 bis 40, vorzugsweise 30 bis 35 Gew.-% der Comonomeren ausmacht, und Vinylalkyläther mit 1 bis 8 Kohlenstoffatomen im Alkylrest, die in Mengen von 3 bis 30, vorzugsweise 5 bis 20 Gew.-% am Aufbau des Mischpolymerisats $(C_1)$ beteiligt sind. Es werden die üblichen Emulgatoren, wie Natriumsalze von Paraffinsulfonsäuren mit 12 bis 18 Kohlenstoffatomen, Arylsulfonate, Natriumsalze von Fettsäuren mit etwa 16 bis 18 Kohlenstoffatomen, Fettalkoholsulfate mit etwa 12 bis 18 Kohlenstoffatomen und ähnliche Emulgatoren in Mengen von etwa 0,1 bis 3 Gew.-%, verwendet, und als Polymerisationsinitiatoren werden im allgemeinen radikalbildende Verbindungen, wie Persulfate, Peroxyde oder Hydroperoxyde oder auch Azoverbindungen, verwendet.

Die Mitverwendung von Vinylalkyläthern, vorzugsweise von Vinylmethyläthern, bei der Herstellung des Mischpolymerisats $(C_1)$ ist von besonderer Bedeutung. Der Vinylalkyläther, dessen alkoholische Komponente 1 bis 8 Kohlenstoffatome enthalten kann, kann bereits vollständig am Anfang der Polymerisation zugesetzt werden. Es ist aber auch möglich ihn absatzweise zuzusetzen. In welcher Weise die Vinylalkyläther einpolymerisieren bzw. coagulieren konnte noch nicht geklärt werden. Es wurde aber festgestellt, daß der Zusatz dieses Monomeren beim Polymerisieren ein Copolymerisat mit besseren Eigenschaften ergibt als die vergleichbare Copolymere ohne dieses Monomer haben.

Die Herstellung des Pfropfmischpolymerisates (C) wird dann in einem zweiten Schritt in analoger Weise wie die Herstellung des Pfropfmischpolymerisates (B) in Gegenwart des Butadien-Acrylsäureester-Vinylätherpolymerisates mit einem Monomerengemisch aus Styrol und Acrylnitril vorgenommen. Das Pfropfen erfolgt in analoger Weise, die bei der Herstellung des Pfropfpolymerisates (B) beschrieben.

Die Mischung der Hartkomponente (A) mit den bei der Propfmischpolymerisation zur Herstellung der Komponenten (B) und (C) erhaltenen Produkte zu den erfindungsgemäßen Massen kann so vorgenommen werden, daß ein Teil der Hartkomponente (A) zunächst mit der Komponente (C) gemischt wird, worauf anschließend die beiden Teilmischungen (A+B) und (A+C) zusammengegeben und vermischt werden. Es ist aber genauso möglich, zunächst die Komponenten (B) und (C) zu vermischen und in dieses Gemisch aus den beiden Pfropfmischpolymerisaten (B+C) anschließend die separat hergestellte Hartkomponente (A) einzumischen. Zum Zwecke der Erfindung werden dabei die Komponenten (A), (B) und (C) in solchen Mengen und in solchen Verhältnissen miteinander gemischt, daß in der Gesamt-Mischung (A+B+C) die beiden als Pfropfgrundlage dienenden Butadien- bzw. Butadien-Acrylsäureester-Vinyläther-Polymerisate $(B_1)$ und $(C_1)$ im Gewichtsverhältnis $(B_1) : (C_1)$ von etwa 70 : 30 bis etwa 30 : 70 und vorzugsweise von 50 : 50 vorliegen, und weiterhin der Anteil der beiden als Pfropfgrundlage dienenden Polymerisate zusammen $(B_1 + C_1)$ in der gesamten Mischung (A+B+C) 10 bis 35 Gew.-%, vorzugsweise 15 bis 30 Gew.-%, bezogen auf die Mischung (A+B+C), ausmacht.

Das Mischen der Komponenten (A), (B) und (C) kann nach jeder beliebigen Weise nach allen bekannten Methoden erfolgen. Wenn die Komponenten z. B. durch Emulsions-Polymerisation hergestellt worden sind, ist es z. B. möglich, die erhaltenen Polymer-Dispersionen miteinander zu vermischen, darauf die Polymerisate gemeinsam auszufällen und das Polymerisat-Gemisch aufzuarbeiten. Vorzugsweise geschieht jedoch das Mischen der Komponenten (A), (B) und (C) durch gemeinsames Extrudieren, Kneten oder Verwalzen der Komponenten, wobei die Komponenten notwendigenfalls zuvor aus der bei der Polymerisation erhaltenen Lösung oder wäßrigen Dispersion isoliert worden sind. Die in wäßriger Dispersion erhaltenen Produkte der Pfropfmischpolymerisationen [Komponenten (B) und (C)] können auch nur teilweise entwässert werden und als feuchte Krümel mit der Hartkomponente (A) vermischt werden, wobei dann während des Vermischens die vollständige Trocknung der Pfropfmischpolymerisate erfolgt.

Die erfindungsgemäßen Mischungen aus den Komponenten (A), (B) und (C) können als weitere Komponente (D) alle Zusatz- und/oder Hilfsstoffe enthalten, wie sie für ABS-Polymerisate üblich und gebräuchlich sind. Als solche Zusatz- und/oder Hilfsstoffe seien beispielsweise genannt: Füllstoffe, weitere verträgliche Kunststoffe, Farbstoffe oder Pigmente, Antistatika, Antioxidantien, Flammschutzmittel und Schmiermittel. Die Zusatz- und Hilfsstoffe werden in üblichen und wirksamen Mengen, vorzugsweise in Mengen von 0,1 bis zu insgesamt etwa 30 Gew.-%, bezogen auf die Mischung (A+B+C), eingesetzt.

Als Antistatika eignen sich z. B. Polyäthylenglykole, Polypropylenglykole und insbesondere Copolymere aus Äthylenoxid und Propylenoxid. Ferner kommen noch Salze von Alkyl- oder Alkylarylsulfonsäuren oder äthoxylierte langkettige Alkylamine in Frage.

Es zeigte sich nun überraschend, daß die erfindungsgemäßen Formmassen nicht nur einen ausgezeichneten Oberflächenglanz haben, sie zeigen nur eine geringe thermische Empfindlichkeit und die Verarbeitungseigenschaften sind ausgezeichnet. So lassen sich z. B. aus den erfindungsgemäßen Formmassen Formkörper unter den unterschiedlichsten Verarbeitungsbedingungen herstellen, wobei die mechanischen Eigenschaften nur innerhalb eines geringen Bereiches variieren. Es zeigt sich außerdem, daß eine Veränderung des Farbtons von dunkel eingefärbten Formmassen also die sogenannte Schimmelbildung ausbleibt. Weiterhin wird bei der Verarbeitung Schlierenbildung vermieden. Ein weiterer Vorteil besteht in der erhöhten Vergilbungsbeständigkeit der Formmassen.

Die erfindungsgemäßen Massen lassen sich nach den für die Thermoplastverarbeitung üblichen Verfahren, wie z. B. Extrusion und Spritzgießen, zu den verschiedenartigsten Formkörpern, wie z. B. Gehäuse für Haushaltsgeräte, Telefone, Platten, Rohre und Kinderspielzeug verarbeiten. Wie erwähnt, eignen sich die erfindungsgemäßen Massen dabei insbesondere zur Herstellung von farbigen Formteilen bzw. Formkörpern der genannten Art, wie sie insbesondere bei Gehäusen für Elektrogeräte, Kinderspielzeug und Möbel Anwendung finden.

Die Erfindung wird durch die nachfolgenden Beispiele näher erläutert. Die in den Beispielen genannten Teile und Prozente beziehen sich, sofern nicht anders angegeben, auf das Gewicht

Bei den erfindungsgemäßen mittleren Teilchengrößen handelt es sich um das Gewichtsmittel der Teilchengrößen, wie sie mittels einer analytischen Ultrazentrifuge entsprechend der Methode von W. Scholtan und H. Lange, Kolloid-Z und Z für Polymere 250 (1972), Seiten 782—796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gewichtsprozent der Teilchen einen kleineren Durchmesser haben als der Durchmesser, der dem $d_{50}$-Wert entspricht. Die Ermittlung der Pfropfausbeute und somit des Anteils des Pfropfmischpolymerisats in dem bei der Pfropfmischpolymerisation erhaltenen Produkt erfolgte durch Extraktion dieses Polymerisationsproduktes mit Methyläthylketon bei 25°C. Der Pfropfgrad der Pfropfmischpolymerisate, d. h. der prozentuale Anteil vom im Pfropfmischpolymerisat enthaltenen gepfropften Styrol und Acrylnitril, ergibt sich am einfachsten aus der elementaranalytischen Bestimmung von Stickstoff (aus Acrylnitril) und Sauerstoff (aus Acrylester) im Methyläthylketon unlöslichen Gel. Die Viskositätszahl der Hartkomponenten wurde, wie bereits beschrieben, in Dimethylformamid gemessen. Die Kerbschlagzähigkeit der Massen wurde nach DIN 53 453 an gespritzten Normkleinstäben bei 23°C ermittelt. Die Spritztemperatur für die Normkleinstäbe betrug dabei 250°C bzw. 280°C.

Die Viskositätszahlen wurden in 0,5%iger Lösung in Dimethylformamid als Lösungsmittel bei einer Temperatur von 25°C ermittelt.

## Beispiele

## Hartkomponente (A)

Durch kontinuierliche Lösungspolymerisation nach einem Verfahren wie es beispielsweise im Kunststoff-Handbuch, Vieweg-Daumiller, Band V, (Polystyrol), Carl Hanser-Verlag, München 1969, Seite 124, Zeilen 12 ff. beschrieben ist, wird ein Copolymerisat, das 65 Teile Styrol und 35 Teile Acrylnitril einpolymerisiert enthält, hergestellt. Das Copolymerisat hat eine Viskositätszahl von 55.

## Pfropfmischpolymerisat (B)

Durch Polymerisation von 55 Teilen Butadien in Gegenwart einer Lösung von 0,6 Teilen tert.-Dodecylmercaptan, 0,7 Teilen $C_{14}$-Na-Alkylsulfonat als Emulgator, 0,2 Teilen Kaliumperoxodisulfat und 0,2 Teilen Natriumpyrophosphat in 80 Teilen Wasser wird bei 25° ein Polybutadienlatex hergestellt. Nach Beendigung der Reaktion wird der Polymerisationsautoklav entspannt. Der Umsatz betrug 98%.

Es wird ein Polybutadien erhalten, dessen mittlere Teilchengröße bei 0,1 µm liegt. Der erhaltene Latex wurde durch Zusatz von 25 Teilen einer Emulsion, eines Copolymeren aus 96 Teilen Äthylacrylat und 4 Teilen Methacrylsäureamid mit einem Feststoffgehalt von 10 Gewichtsteilen agglomeriert, wobei ein Polybutadienlatex mit einer mittleren Teilchengröße von 0,35 µm entstand. Nach Zusetzen von 40 Teilen Wasser, 0,4 Teilen Na-$C_{14}$-Alkylsulfonat und 0,2 Teilen Kaliumperoxodisulfat wurden 45 Teile einer Mischung aus Styrol und Acrylnitril im Verhältnis von 70 : 30 innerhalb von 4 Stunden zugeführt. Die Polymerisation erfolgte unter Rühren des Ansatzes bei 75°C. Der Umsatz, bezogen auf Styrol-Acrylnitril war praktisch quantitativ. Die erhaltene Pfropfkautschukdispersion wurde mittels Calciumchloridlösung gefällt und das abgetrennte Pfropfmischpolymerisat mit destilliertem Wasser gewaschen.

## Pfropfpolymerisat (C)

In einem Rührautoklaven, der 150 Teile destilliertes Wasser, einen Teil Na-$C_{14}$-Alkylsulfonat, 0,2 Teile Kaliumperoxodisulfat und 0,2 Teile Natriumpyrophosphat enthält, wird der Inhalt auf 65°C erhitzt. Danach werden 10 Teile Butadien, 10 Teile Butylacrylat und 3 Teile Vinylmethyläther zugegeben und für die Dauer von 1 Stunde gerührt. Im Anschluß daran wird im Verlauf von 6 Stunden ein Gemisch aus 20 Teilen Butadien ud 32 Teilen Butylacrylat kontinuierlich zugesetzt. Danach wird für die Dauer von 2 Stunden weiter polymerisiert und anschließend der Rührautoklav entspannt. Die erhaltene Polymerdispersion, die einen Feststoffgehalt von 33% hat, zeichnet sich durch eine enge Teilchengrößenverteilung aus, wobei ein mittlerer Teilchengrößendurchmesser von 0,08 μm vorliegt.

Nach Zusatz von 0,1 Teilen Kaliumperoxodisulfat wurde diese Dispersion mit einer Mischung aus 25 Teilen Styrol/Acrylnitril im Mischungsverhältnis 70 : 30 im Verlauf von 2 Stunden versetzt. Danach wird weiterhin für die Dauer von einer Stunde polymerisiert. Der Umsatz, bezogen auf Styrol/Acrylnitril, lag über 99%.

Die Aufarbeitung des erhaltenen Pfropfpolymerisates erfolgte wie unter Pfropfpolymerisat (B) beschrieben.

Aus jeweils 67 Teilen der Hartkomponente und unterschiedlichen Teilen der Pfropfmischpolymerisate (B) und (C) sowie jeweils einem Teil eines Äthylenoxid/Propylenoxid-Blockcopolymerisat mit einen mittleren Molekulargewicht von ca. 3000, 0,2 Teilen eines phenolischen Antioxidans und 4 Teilen eines Pigmentfarbstoffs wird auf einem Mischextruder eine Granulatmischung hergestellt.

Die Mischungsverhältnisse der Komponente (A), (B) und (C) sind in der nachstehenden Tabelle 1 angegeben.

Mischungen der erfindungsgemäßen Beispiele 2, 4, 5 und 11 und der Vergleichsbeispiele b, d und e wurden schwarz eingefärbt und zu Platten der Abmessung $100 \times 100 \times 3$ mm verpreßt. Diese Platten wurden in einem geschlossenen Raum, in den Tageslicht durch Fenster eindringen konnte, gelagert. Die Vergleichskörper aus den Mischungen b, d und e zeigten nach 3 Monaten eine graue Oberfläche (Schimmelbildung) wogegen die Platten aus Mischungen nach den erfindungsgemäßen Beispielen das Aussehen nicht verändert hatten.

Jeweils 50 g der Mischungen 1 bis 11, a und c wurden auf einem Laborwalzwerk ($225 \times 10$ mm der Firma Berstorf) aufgebracht und 5 Minuten bei 200°C bei 15 U/min zu einem ca. 400 μm starken Walzfell verarbeitet.

Die Proben aus den erfindungsgemäßen Mischungen 1 bis 11 ergaben eine homogen ausgebildete Schmelze im Walzwerk und ein völlig stippen- und streifenfreies Walzfell.

Die Mischungen a und c ließen sich bei einer unregelmäßigen Schmelze nur zu einem stippen- und streifenreichen Walzfell verarbeiten.

Aus den Mischungen wurden mittels einer Spritzgußmaschine vom Typ Arburg-Allrounder 200 bei den im folgenden angegebenen Temperaturen rot eingefärbte Platten mit den Abmessungen $50 \times 40 \times 2$ mm hergestellt. An den Probekörpern wurde der Glanz durch Reflektionsmessung mit einem Lange-Fotometer bestimmt. Die Einfalls- und Reflektionswinkel betrugen jeweils 45°. Als Standart diente weißes Vliespapier ($=0$ Skalenteile) und ein Schwarzglasspiegel ($=65$ Skalenteile). Die Ergebnisse sind in der Tabelle 2 zusammengefaßt.

Bei den Teilen, die aus erfindungsgemäßen Mischungen hergestellt wurden, konnte im Gegensatz zu den Vergleichsbeispielen d keine Abhängigkeit des Glanzes von der Verarbeitungstemperatur beobachtet werden.

Zur Ermittlung des Vergilbungsverhaltens wurden weiß eingefärbte Platten mit der Abmessung $50 \times 40 \times 2$ mm hergestellt. Diese Platten wurden in einem Xenongerät 1200 der Firma Hereus bis zu 200 Stunden belichtet. Bei den erfindungsgemäßen Proben konnte im Gegensatz zu den Vergleichsproben a, c und e nur eine schwache Vergilbung ermittelt werden.

Die Ergebnisse zeigt Tabelle 3.

Tabelle 1

Zusammensetzung der Mischungen

| Beispiel (erfindungsgemäß) | Hartkomponente (A) | | | | Pfropfmischpolymerisat (B) | | | | |
|---|---|---|---|---|---|---|---|---|---|
| | Styrol [Tle] | Acrylnitril [Tle] | Viskositätszahl | Teile in der Mischung | Kautschuk [Tle] | $d_{50}$ [μm] (agglom. Kautschuk) | Pfropfgrad | Teile Acryl-nitril in d. Pfropfhülle | Teile in der Mischung |
| 1 | 65 | 35 | 55 | 67 | 55 | 0,35 | 45 | 30 | 18 |
| 2 | 65 | 35 | 80/55 (1 : 2) | 67 | 55 | 0,35 | 45 | 30 | 18 |
| 3 | 65 | 35 | 55 | 67 | 55 | 0,35 | 45 | 30 | 13 |
| 4 | 65 | 35 | 55 | 67 | 55 | 0,35 | 45 | 30 | 20 |
| 5 | 65 | 35 | 55 | 67 | 55 | 0,35 | 45 | 30 | 23 |
| 6 | 65 | 35 | 55 | 67 | 55 | 0,35 | 45 | 30 | 10 |
| 7 | 75 | 25 | 80 | 67 | 55 | 0,35 | 45 | 30 | 18 |
| 8 | 65 | 35 | 80 | 67 | 55 | 0,35 | 45 | 30 | 18 |
| 9 | 65 | 35 | 80/55 (1 : 2) | 67 | 60 | 0,35 | 40 | 30 | 18 |
| 10 | 65 | 35 | 80/55 (1 : 2) | 67 | 45 | 0,35 | 55 | 30 | 18 |
| 11 | 65 | 35 | 80/55 (1 : 2) | 67 | 55 | 0,35 | 45 | 30 | 18 |

Fortsetzung

| | Hartkomponente (A) | | | | Pfropfmischpolymerisat (B) | | | | |
|---|---|---|---|---|---|---|---|---|---|
| | Styrol [Tle] | Acrylnitril [Tle] | Viskositätszahl | Teile in der Mischung | Kautschuk [Tle] | $d_{50}$ [$\mu$m] (agglom. Kautschuk) | Pfropfgrad | Teile Acryl- nitril in d. Pfropfhülle | Teile in der Mischung |
| Vergleichsbeispiele (nicht erfindungsgemäß) | | | | | | | | | |
| a | 65 | 35 | 55 | 67 | 55 | 0,35 | 45 | 30 | 33 |
| b | 65 | 35 | 55 | 67 | 55 | 0,35 | 45 | 30 | 3 |
| c | 65 | 35 | 55 | 67 | 55 | 0,35 | 45 | 30 | 30 |
| d | 65 | 35 | 55 | 67 | — | — | — | — | — |
| e | 65 | 35 | 55 | 67 | — | — | — | — | — |

(Tabelle 1 — Fortsetzung)

| | Pfropfmischpolymerisat (C) | | Butadien | Butylacrylat | Vinylmethyl-äther | Pfropfgrad | Teile Acryl-nitril in d. Pfropfhülle | Teile in d. Mischung |
|---|---|---|---|---|---|---|---|---|
| | Kautschuk [Tle] | $d_{50}$ [μm] Kautschuk | [Tle] | [Tle] | [Tle] | | | |
| **Beispiel (erfindungsgemäß)** | | | | | | | | |
| 1 | 75 | 0,08 | 40 | 56 | 4 | 25 | 30 | 15 |
| 2 | 75 | 0,08 | 40 | 56 | 4 | 25 | 30 | 15 |
| 3 | 75 | 0,08 | 40 | 56 | 4 | 25 | 30 | 20 |
| 4 | 75 | 0,08 | 40 | 56 | 4 | 25 | 30 | 13 |
| 5 | 75 | 0,08 | 40 | 56 | 4 | 25 | 30 | 10 |
| 6 | 75 | 0,08 | 40 | 56 | 4 | 25 | 30 | 23 |
| 7 | 75 | 0,08 | 40 | 56 | 4 | 25 | 30 | 15 |
| 8 | 75 | 0,08 | 40 | 56 | 4 | 25 | 30 | 15 |
| 9 | 75 | 0,08 | 40 | 56 | 4 | 25 | 30 | 15 |
| 10 | 75 | 0,08 | 40 | 56 | 4 | 25 | 30 | 15 |
| 11 | 75 | 0,08 | 40 | 56 | 4 | 25 | 30 | 15 |
| **Vergleichsbeispiele (nicht erfindungsgemäß)** | | | | | | | | |
| a | — | — | — | — | — | — | — | — |
| b | 75 | 0,08 | 40 | 56 | 4 | 25 | 30 | 30 |
| c | 75 | 0,08 | 40 | 56 | 4 | 25 | 30 | 3 |
| d | 75 | 0,08 | 40 | 56 | 4 | 25 | 30 | 33 |
| e | 75 | 0,08 | 41 | 59 | — | 25 | 30 | 33 |

Tabelle 2

Abhängigkeit des Oberflächenglanzes von der Verarbeitungstemperatur

| | Verarbeitungstemperatur [°C] | | | | | | | | | | | |
| --- | --- | --- | --- | --- | --- | --- | --- | --- | --- | --- | --- | --- |
| | 230 | | | | 250 | | | | 270 | | | |
| | Formtemperatur [°C] | | | | | | | | | | | |
| | 30 | | 60 | | 30 | | 60 | | 30 | | 60 | |
| | Einspritzgeschwindigkeit [sec] | | | | | | | | | | | |
| | 0,4 | 2,0 | 0,4 | 2,0 | 0,4 | 2,0 | 0,4 | 2,0 | 0,4 | 2,0 | 0,4 | 2,0 |
| Beispiel 2 | 51 | 52 | 52 | 55 | 51 | 51 | 54 | 53 | 49 | 53 | 54 | 53 |
| Vergleichsbeispiel D | 47 | 19 | 62 | 41 | 51 | 24 | 63 | 41 | 45 | 17 | 55 | 29 |

Tabelle 3

Vergilbungsverhalten von weißgefärbten Platten im Xenongerät (nach ASTM D 1925)

| Beispiel | Yellowness-Index | |
| --- | --- | --- |
| | Ausgang | nach 200 Stdn. |
| 1 | 6 | 9 |
| 2 | 7 | 12 |
| 7 | 8 | 12 |
| A | 10 | 18 |
| C | 9 | 17 |
| E | 12 | 19 |

**Patentansprüche**

1. Mischung, bestehend im wesentlichen aus

(A) einer Hartkomponente aus einem oder mehreren Copolymerisaten von Styrol und/oder α-Methylstyrol mit Acrylnitril, wobei diese Copolymerisate 20 bis 40 Gew.-% Acrylnitril einpolymerisiert enthalten,

(B) einem ersten Pfropfmischpolymerisat, das gebildet worden ist aus

(B₁) 40 bis 80 Gew.-%, bezogen auf (B), eines Butadienpolymerisates aus teilweise agglomerierten Teilchen, wobei mehr als 50% der Teilchen (Zahlen-Verteilung) im nicht agglomerierten Zustand vorliegen, mit einer mittleren Teilchengröße von 0,20 bis 0,45 μm (d₅₀-Wert der integralen Massenverteilung), worauf

(B₂) 20 bis 60 Gew.-%, bezogen auf (B), einer Mischung von Styrol und Acrylnitril im Gewichtsverhältnis 75 : 25 bis 65 : 35 aufgepfropft worden ist,

(C) einem zweiten, getrennt hergestellten Pfropfmischpolymerisat das gebildet worden ist aus

(C₁) 50 bis 85 Gew.-%, bezogen auf (C), eines Copolymerisats aus 30 bis 77 Gew.-% Acrylsäurebutylester und/oder Acrylsäureäthylhexylester, 20 bis 40 Gew.-% Butadien und 3 bis 30 Gew.-% Vinylalkyläther mit 1 bis 8 Kohlenstoffatomen im Alkylrest, wobei sich die Prozente zu 100 addieren, mit einer mittleren Teilchengröße unter 0,15 μm (d₅₀-Wert der integralen Massenverteilung) worauf

(C₂) 15 bis 50 Gew.-%, bezogen auf (C), einer Mischung von Styrol und Acrylnitril im Gewichtsverhältnis 75 : 25 bis 65 : 35 aufgepfropft worden ist;

wobei in der Mischung [(A)+(B)+(C)] das Gewichtsverhältnis der Pfropfgrundlagen (B₁) und (C₁) im Bereich 70 : 30 bis 30 : 70 liegt und der Anteil der Summe der beiden Pfropfgrundlagen (B₁ und C₁) 10 bis 35 Gew.-%, bezogen auf die Gesamtmischung [(A)+(B)+(C)], beträgt.

2. Mischung nach Anspruch 1, dadurch gekennzeichnet, daß sie als erstes Pfropfmischpolymerisat (B) ein solches enthält, dessen Pfropfgrundlage (B₁) eine mittlere Teilchengröße im Bereich von 0,26 bis 0,35 µm besitzt.

3. Mischung nach den Ansprüchen 1 und 2, dadurch gekennzeichnet, daß die Komponenten (A), (B) und (C) in solchen Mengen in der Mischung enthalten sind, daß der Anteil der beiden Pfropfgrundlagen (B₁)+(C₁) zusammen 15 bis 30 Gew.-%, bezogen auf die Gesamt-Mischung [(A)+(B)+(C)], ausmacht.

4. Mischung nach Anspruch 1, dadurch gekennzeichnet, daß sie als weitere Komponente (D) übliche Zusatz- und/oder Hilfsstoffe in gebräuchlichen und wirksamen Mengen enthält.

5. Mischung nach Anspruch 4, dadurch gekennzeichnet, daß die weitere Komponente (D) ein Äthylen- und/oder Propylenoxidpolymerisat ist.

6. Mischung nach Anspruch 4, dadurch gekennzeichnet, daß die weitere Komponente (D) ein Farbstoff oder ein Farbpigment ist.

7. Verwendung der Mischung nach Anspruch 1 bis 6 zur Herstellung von Formkörpern oder Formteilen.

8. Formkörper oder Formteile, hergestellt durch Spritzgußverarbeitung einer Mischung nach Anspruch 1 bis 6.

## Claims

1. A mixture which consists essentially of

(A) a hard component consisting of one or more copolymers of styrene and/or $\alpha$-methylstyrene with acrylonitrile, the said copolymers containing from 20 to 40% by weight of acrylonitrile as copolymerized units,

(B) a first graft copolymer consisting of
    (B₁) from 40 to 80% by weight, based on (B), of a butadiene polymer consisting of partially agglomerated particles, more than 50% of the particles (number distribution) being present in the non-agglomerated state, and having a mean particle size ($d_{50}$ value of the cumulative mass distribution) of from 0.20 to 0.45 µm, onto which is grafted
    (B₂) from 20 to 60% by weight, based on (B), of a mixture of styrene and acrylonitrile in a weight ratio of from 75 : 25 to 65 : 35,

(C) a second, separately prepared graft copolymer which consists of
    (C₁) from 50 to 85% by weight, based on (C), of a copolymer which itself consists of from 30 to 77% by weight of butyl acrylate and/or ethylhexyl acrylate units, from 20 to 40% by weight of butadiene units and from 3 to 30% by weight of vinyl alkyl ether units, where alkyl is of 1 to 8 carbon atoms, the percentages of the said three monomer constituents together being 100, with a mean particle size ($d_{50}$ value of the cumulative mass distribution) of less than 0.15 µm, onto which has been grafted
    (C₂) from 15 to 50% by weight, based on (C), of a mixture of styrene and acrylonitrile in a weight ratio of from 75 : 25 to 65 : 35,

the weight ratio of the grafting bases (B₁) and (C₁) in the mixture of [(A)+(B)+(C)] being from 70 : 30 to 30 : 70, and the sum of the two grafting bases (B₁ and C₁) being from about 10 to 35% by weight, based on the total mixture [(A)+(B)+(C)].

2. A mixture as claimed in claim 1, characterized in that it contains as first graft copolymer (B) one whose grafting base (B₁) has a mean particle size of from 0.26 to 0.35 µm.

3. A mixture as claimed in claims 1 and 2, characterized in that components (A), (B) and (C) are contained in the mixture in such amounts that the sum of the two grafting bases (B₁ and C₁) is from 15 to 30% by weight, based on the total mixture [(A)+(B)+(C)].

4. A mixture as claimed in claim 1, characterized in that it contains conventional additives and/or assistants, in customary and effective amounts, as a further component (D).

5. A mixture as claimed in claim 4, characterized in that the further component (D) is an ethylene oxide and/or propylene oxide polymer.

6. A mixture as claimed in claim 4, characterized in that the further component (D) is a dye or dye-pigment.

7. Use of a mixture as claimed in claims 1 to 6 for the production of mouldings or shaped articles.

8. Mouldings or shaped articles produced by injection moulding a mixture as claimed in claims 1 to 6.

## Revendications

1. Composition, essentiellement formée de:

(A) une composante dure à base d'un ou de plusieurs copolymérisats du styrène et(ou) de l'α-méthyl-styrène et de l'acrylonitrile, la proportion de l'acrylonitrile copolymérisé étant comprise entre 20 et 40% en poids;

(B) un premier copolymérisat de greffage formé de:

(B$_1$) 40 à 80% en poids par rapport à (B) d'un polymérisat du butadiène en particules partiellement agglomérées, plus de 50% des particules (répartition statistique) se trouvant à l'état non aggloméré, avec une granulométrie moyenne comprise entre 0,20 et 0,45 μm (valeur d$_{50}$ de la distribution intégrale des masses), sur lequel sont greffés

(B$_2$) 20 à 60% en poids par rapport à (B) d'un mélange de styrène et d'acrylonitrile dans des proportions en poids dans un rapport compris entre 75 : 25 et 65 . 35;

(C) un deuxième copolymérisat de greffage, préparé séparément et formé de:

(C$_1$) 50 à 85% en poids par rapport à (C) d'un copolymérisat de 30 à 77% en poids d'acrylate de butyle et(ou) d'acrylate d'éthyl-hexyle, de 20 à 40% en poids de butadiène et de 3 à 30% en poids d'un éther vinyl-alcoylique à radical alcoyle en C$_1$ à C$_8$ (la somme des pourcentages étant égale à 100), d'une granulométrie moyenne inférieure à 0,15 μm (valeur d$_{50}$ de la distribution intégrale des masses), sur lequel sont greffés

(C$_2$) 10 à 50% en poids par rapport à (C) d'un mélange de styrène et d'acrylonitrile dans des proportions en poids dans un rapport compris entre 75 : 25 et 65 : 35,

les proportions en poids des bases de greffage (B$_1$) et (C$_1$), dans le mélange (A) + (B) + (C), étant dans un rapport compris entre 70 : 30 et 30 : 70 et la somme des poids de ces bases de greffage (B$_1$) et (C$_1$) représentant entre 10 et 35% du poids total de (A) + (B) + (C).

2. Composition suivant la revendication 1, caractérisée en ce qu'elle contient comme premier copolymérisat de greffage (B) un copolymérisat, dont la base de greffage (B$_1$) possède une granulométrie moyenne dans la gamme de 0,26 à 0,35 μm.

3. Composition suivant les revendications 1 et 2, caractérisée en ce qu'elle contient les composantes (A), (B) et (C) en des proportions telles que la somme des bases de greffage (B$_1$) + (C$_1$) constitue entre 15 et 30% du poids total de (A) + (B) + (C).

4. Composition suivant la revendication 1, caractérisée en ce qu'elle contient comme composante additionnelle (D) des additifs et(ou) adjuvants usuels dans des proportions efficaces habituelles.

5. Composition suivant la revendication 4, caractérisée en ce que la composante additionnelle (D) est constituée d'un polymérisat de l'oxyde d'éthylène et(ou) de l'oxyde de propylène.

6. Composition suivant la revendication 4, caractérisée en ce que la composante additionnelle (D) est constituée par une substance colorante ou un pigment colorant.

7. Utilisation d'une composition suivant les revendications 1 à 6 pour la fabrication d'articles ou d'éléments façonnés.

8. Articles et éléments façonnés, fabriqués par moulage par injection d'une composition suivant les revendications 1 à 6.